# EUROPÄISCHE PATENTSCHRIFT

(11) **EP 3 164 558 B1**
(45) Veröffentlichungstag und Bekanntmachung des Hinweises auf die Patenterteilung: **29.08.2018**
(21) Anmeldenummer: 15747407.3
(22) Anmeldetag: 24.07.2015
(51) Int. Cl.: E05B 47/02, E05B 47/00, E05B 65/10

(54) **VORRICHTUNG ZUR GESTEUERTEN ARRETIERUNG ODER FREIGABE EINES SICHERHEITSRELEVANTEN, BEWEGLICHEN BAUTEILS**
DEVICE FOR LOCKING OR RELEASING A SAFETY-RELEVANT, MOVABLE COMPONENT IN A CONTROLLED MANNER
DISPOSITIF SERVANT À BLOQUER OU À LIBÉRER, DE MANIÈRE COMMANDÉE, UN ÉLÉMENT MOBILE IMPORTANT POUR LA SÉCURITÉ

(30) Priorität: 17.10.2014 DE 102014015389
(43) Veröffentlichungstag der Anmeldung: 10.05.2017
(73) Patentinhaber: EUCHNER GmbH + Co. KG, 70771 Leinfelden-Echterdingen (DE)
(72) Erfinder: HERMANN, Bernd, 72108 Rottenburg (DE)
(74) Vertreter: Ruckh, Rainer Gerhard
(86) Internationale Anmeldenummer: PCT/EP2015/067021
(87) Internationale Veröffentlichungsnummer: WO 2016/058718

(56) Entgegenhaltungen:
- WO-A1-2007/125163
- GB-A- 2 225 375
- US-A- 4 800 741
- US-A1- 2006 186 673
- US-A1- 2010 123 323

## Beschreibung

Die Erfindung betrifft eine Vorrichtung zur gesteuerten Arretierung oder Freigabe eines sicherheitsrelevanten, beweglichen Bauteils, wie einer Schutztür, Schutzklappe oder dergleichen, mit einem bewegbaren Sperrteil und mit einem Einstellbewegungen des Sperrteils zwischen Arretierposition und Freigabeposition steuernden selbsthemmenden Antrieb.

Vorrichtungen dieser Gattung sind Stand der Technik und kommen bevorzugt bei Einrichtungen zum Einsatz, die Bestandteil eines Sicherungssystems bilden, bei dem bewegliche Bauteile in einer Position verriegelbar sind, in der sie für einen zu schützenden Raumbereich eine den Zugang oder Zugriff verhindernde Umgrenzung bilden, etwa in Form einer Schutztür oder -klappe als Schutzeinrichtung am Gefahrenbereich einer Maschine. Eine Vorrichtung der eingangs genannten Gattung ist in dem Dokument DE 10 2009 041 101 A1 offenbart. Diese Druckschrift zeigt zwei Varianten einer Arretiervorrichtung, wobei jeweils ein rotatorischer Antrieb mit einem Elektromotor vorgesehen ist. Im einen Fall befindet sich auf der Antriebswelle des Elektromotors ein Stirnrad, das mit einer zahnstangenartigen Verzahnung am Sperrteil in Eingriff ist, das als Zuhaltebolzen ausgebildet ist, der durch die Drehbewegungen des Elektromotors in der einen oder anderen Drehrichtung in die Arretierposition oder Freigabeposition axial beweglich ist. Diese Ausbildung des Antriebs mit dem unmittelbar mit der Motor-Antriebswelle verbundenen Zahnrad/Zahnstangen/Getriebe ist, abweichend von der eingangs genannten Gattung, nicht selbsthemmend. Dies bedeutet, dass der Zuhaltebolzen bei nicht mit elektrischer Energie versorgtem Elektromotor oder bei Funktionsausfall des Elektromotors ungewollt, etwa bei Schwing- oder Schockbeanspruchung, bewegbar und beispielsweise aus der Arretierposition in die Freigabeposition verschiebbar ist. Bei Arretiereinrichtungen für sicherheitsrelevante Bauteile ist dies nicht hinnehmbar.

Eine in dem genannten Dokument gezeigte, gattungsgemäße zweite Vorrichtungsvariante vermeidet diesen Sicherheitsmangel dadurch, dass zwischen dem Elektromotor und dem Sperrteil eine Getriebeanordnung vorgesehen ist, die ein Schneckengetriebe und eine Kniehebel-Baugruppe aufweist. Da eine derartige Getriebeanordnung selbsthemmend ist, ist zwar die Gefahr vermieden, dass das Sperrteil bei einem Ausfall des Antriebs aus der Arretierposition in die Freigabeposition bewegt wird und dadurch eine unbeabsichtigte Entriegelung zustande kommt, es muss dafür aber der Nachteil in Kauf genommen werden, dass bei einem Antriebsausfall auch keine Betätigung im Sinne einer Notbetätigung möglich ist, um bei einem Gefahrenzustand, bei dem der Zugang oder Zugriff zum umgrenzten Raumbereich erforderlich ist, eine sog. Fluchtentriegelung zu ermöglichen.

Die GB 2 225 375 A betrifft einen Schließmechanismus für eine Tür. Der Schließmechanismus umfasst als Sperrglied einen Bolzen, der mittels eines Elektromotors und diesem nachgeordneten, auf einen Arm wirkenden Transmissionsmitteln zwischen einer Arretierposition und einer Freigabeposition bewegt werden kann. Eines der Transmissionsmittel ist als Betätiger ausgebildet, der zum Überführen des Bolzens an eine Freigabeposition mit diesem gekoppelt ist. Weiterhin ist eine mechanische Entkopplung des Elektromotors zum Bolzen vorgesehen.

In US 2006/0186673 A1 ist eine Verriegelungsvorrichtung für eine Tür beschrieben. Zur Verriegelung der Tür ist ein Bolzen vorgesehen, der mittels einer Antriebsvorrichtung betätigt werden kann. Hierzu kann die Antriebsvorrichtung über einen Aktuator an den Bolzen angekoppelt werden. Diese Kopplung kann durch einen Fluchtentriegelungsmechanismus aufgehoben werden.

Der Erfindung liegt die Aufgabe zugrunde, eine Vorrichtung der eingangs genannten Gattung zur Verfügung zu stellen, bei welcher Sicherheitsmängel vermieden werden.

Erfindungsgemäß ist diese Aufgabe durch eine Vorrichtung gelöst, die die Merkmale des Patentanspruchs 1 in seiner Gesamtheit aufweist.

Bei der erfindungsgemäßen Vorrichtung ist ein von einem selbsthemmenden Antrieb bewegbarer Betätiger vorgesehen, der für ein vom Antrieb bewirktes Überführen des Sperrteils in die Freigabeposition mit diesem mechanisch gekoppelt und für ein unabhängig vom Antrieb bewirktes Überführen in die Freigabeposition vom Sperrteil entkoppelbar ist. Die Benutzung eines selbsthemmenden Getriebes in Kombination mit der bei der Erfindung vorgesehenen Möglichkeit der Entkopplung zwischen Betätiger und Sperrteil vermeidet zum einen die Gefahr einer unbeabsichtigten Entriegelung bei einer Funktionsstörung des Antriebs und bei einer Krafteinwirkung auf das Sperrteil. Des Weiteren vermeidet die erfindungsgemäß gebotene Entkoppelmöglichkeit zwischen Betätiger und Sperrteil auch ein Sicherheitsrisiko bei Gefahrenzuständen, indem eine unabhängig vom Antrieb erfolgende Fluchtentriegelung ermöglicht ist.

Mit besonderem Vorteil kann die erfindungsgemäße Vorrichtung als Bolzenzuhaltung mit einem Sperrteil in Form eines Zuhaltebolzens ausgebildet sein, der für seine Bewegungen zwischen Arretierposition und Freigabeposition koaxial zu einer linearen Verschiebebewegung des Betätigers gelagert und durch einen Energiespeicher in die Arretierposition vorgespannt ist.

Für die Vorrichtung kann ein rotatorischer Antrieb mit einem die Drehbewegung der Antriebswelle eines Elektromotors in zur Achse der Antriebswelle koaxiale Linearbewegungen des Betätigers umsetzenden Getriebe vorgesehen sein.

Erfindungsgemäß ist als Getriebe, das dem Antrieb die selbsthemmende Eigenschaft verleiht, ein Planetengetriebe sowie ein durch dieses antreibbarer, den Betätiger zwischen vorgeschobenen und zurückgezogenen Schaltstellungen bewegender Spindeltrieb vorgesehen sein. Die Benutzung eines Planetengetriebes als Getriebebestandteil ermöglicht die Übertragung hoher Momente auf kleinstem Raum, wobei gleichzeitig hohe Übersetzungsverhältnisse realisierbar sind, und ermöglicht in Kombination mit einem Spindeltrieb eine besonders kompakte Bauweise des feststehenden Gehäuses der Vorrichtung, so dass sich diese auch bei geringen zur Verfügung stehenden Einbauräumen ohne Schwierigkeiten in sicherheitstechnische Anlagen integrieren lässt.

Als Betätiger kann mit besonderem Vorteil ein Stößel in Form einer Stange vorgesehen sein, der sich in einen zentralen Durchgang des Gehäuses der Arretiereinrichtung hinein erstreckt.

Dabei kann die Anordnung mit Vorteil so getroffen sein, dass der Stößel an dem vom Antrieb abgewandten Ende einen auskragenden Mitnehmer aufweist, der zur Übertragung seiner Rückzugsbewegung mit einer am Zuhaltebolzen befindlichen Anlagefläche zusammenwirkt, wobei am Zuhaltebolzen eine Entkoppelstrecke gebildet ist, über deren Länge der Zuhaltebolzen bei von der Anlagefläche abgehobenem Mitnehmer gegen die angreifende Vorspannkraft des Energiespeichers aus der Arretierposition in die Freigabeposition bewegbar ist. Der in vorgeschobener Arretierposition befindliche Zuhaltebolzen ist dadurch vom Mitnehmer des Stößels derart entkoppelt, dass er gegen die an ihm wirkende Vorspannkraft, unabhängig davon, welche Axialposition der Stößel einnimmt, in einem Bedarfsfall aus der Arretierposition in die Freigabeposition bewegbar ist.

Bei besonders vorteilhaften Ausführungsbeispielen weist der Zuhaltebolzen ein sich axial in Richtung auf den Antrieb erstreckendes Hülsenteil auf, in dem als Entkoppelstrecke für den Mitnehmer des Stößels eine Führungsbahn gebildet ist, über deren Länge der Zuhaltebolzen relativ zum Mitnehmer axial gegen die Vorspannkraft des Energiespeichers bewegbar ist.

Mit besonderem Vorteil kann die Anordnung dabei so getroffen sein, dass der Zuhaltebolzen im offenen Ende des Gehäuses mit einem radial auskragenden Flanschteil geführt ist, an das sich das Hülsenteil anschließt, das von einer als Energiespeicher vorgesehenen Schließfeder in Form einer Schraubenfeder umgeben ist, die sich einerseits am Flanschteil und andererseits an einer Stufe im Durchgang des Gehäuses abstützt. Die Arretiereinrichtung ist auf diese Weise in besonders kompakter Bauweise realisierbar.

Für eine im Bedarfsfall vorzunehmende Flucht- oder Notentriegelung der Arretiereinrichtung kann eine Notbetätigung vorgesehen sein, mittels deren der Zuhaltebolzen unter Abheben des Mitnehmers des Stößels von der Anlagefläche gegen die Wirkung der Schraubenfeder manuell aus der Arretierposition in die Freigabeposition bewegbar ist. In vorteilhafter Ausgestaltung kann die Notbetätigung einen Notknopf aufweisen, der mit einer im Gehäuse quer zur Achse bewegbaren Betätigungsstange verbunden ist, die an dem sich in den Gehäusedurchgang erstreckenden Ende Schrägflächen aufweist, die bei Betätigen des Notknopfes an einem vorstehenden Flanschrand des Hülsenteils des Zuhaltebolzens angreifen, um diesen gegen die Wirkung der Schraubenfeder zu bewegen.

Nachstehend ist die Erfindung anhand eines in der Zeichnung dargestellten Ausführungsbeispiels im Einzelnen erläutert.

### Es zeigen:

- Fig. 1: eine perspektivische Schrägansicht des rotatorischen Antriebs für ein Ausführungsbeispiel der erfindungsgemäßen Vorrichtung ohne zugehörige Arretiereinrichtung;
- Fig. 2: in perspektivischer Schrägansicht und in auseinandergezogener Explosionsdarstellung die Einzelteile des rotatorischen Antriebs des Ausführungsbeispiels;
- Fig. 3: eine längs aufgeschnittene, perspektivische Schrägansicht des Antriebs;
- Fig. 4: eine längs aufgeschnittene, perspektivische Schrägansicht des Ausführungsbeispiels, wobei der Antrieb abgebrochen gezeigt ist und die Arretiereinrichtung in Form einer Bolzenzuhaltung im Zustand der Verriegelung einer Schutztür gezeigt ist;
- Fig. 5: eine der Fig. 4 entsprechende Darstellung, wobei der Freigabezustand gezeigt ist;
- Fig. 6: eine den Fig. 4 und 5 entsprechende Darstellung, wobei der Zustand einer Fluchtentriegelung gezeigt ist;
- Fig. 7: einen schematisch vereinfachten Teillängsschnitt mit gegenüber Fig. 4 bis 6 verdrehter Schnittebene, wobei der Verriegelungszustand der nur schematisiert angedeuteten Tür dargestellt ist, und
- Fig. 8: einen der Fig. 7 entsprechenden, jedoch abgebrochen gezeichneten Teillängsschnitt, wobei der in Fig. 6 gezeigte Zustand der Fluchtentriegelung dargestellt ist.

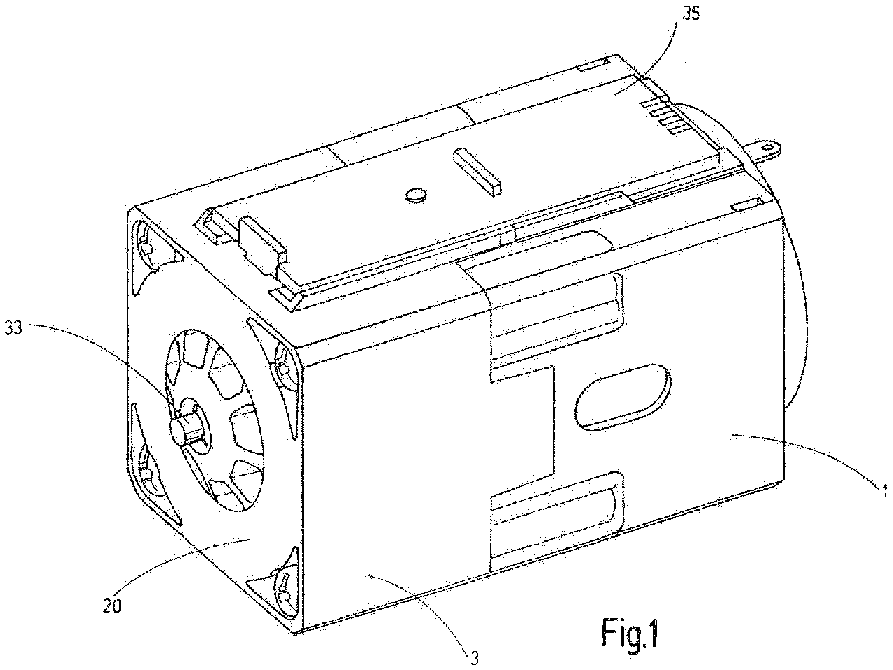

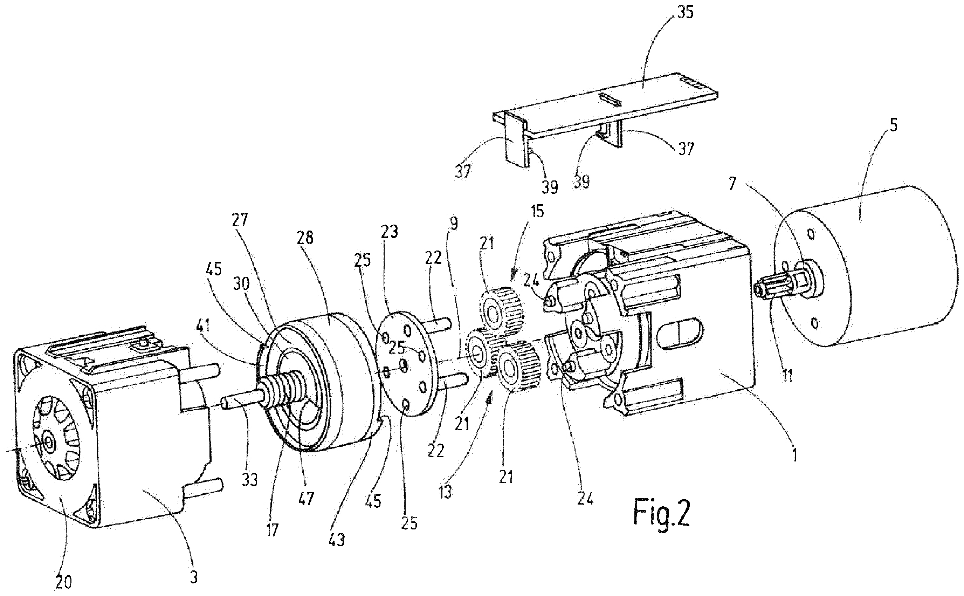

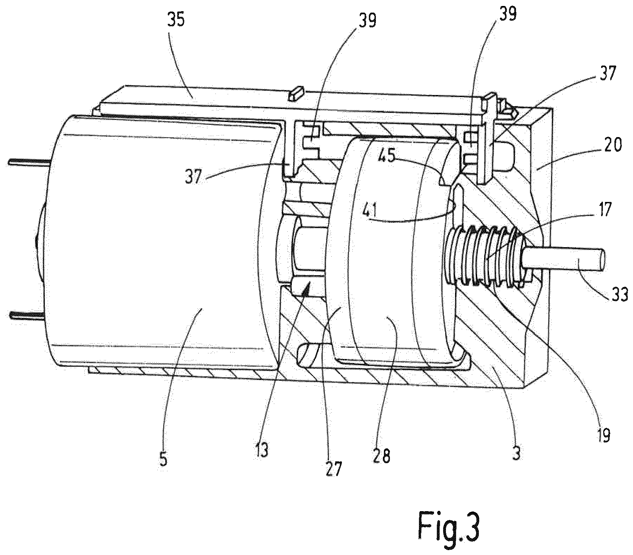

Mit Bezug auf die Zeichnung ist die Erfindung am Beispiel einer Arretiereinrichtung in Form einer Bolzenzuhaltung für eine Schutztür erläutert, wobei ein rotatorischer Antrieb mit einem Elektromotor 5 vorgesehen ist. Dieser Antrieb, der in Fig. 1 bis 3 ohne zugehörige Arretiereinrichtung dargestellt ist, weist ein aus Gehäuseteilen 1 und 3 gebildetes Antriebsgehäuse auf, das in dem in Fig. 1 gezeigten, geschlossenen Zustand die Form eines rechteckförmigen Quaders mit quadratischem Querschnitt besitzt. Die Fig. 2 und 3 zeigen nähere Einzelheiten des Antriebs. Das in Fig. 2 rechtsseitig gelegene Gehäuseteil 1 bildet das Motorgehäuse für den Elektromotor 5, der im Gehäuseteil 1 derart gelagert ist, dass sich seine Antriebswelle 7 entlang der zentralen Längsachse 9 der Gehäuseteile 1, 3 erstreckt. Auf der Antriebswelle 7 befindet sich ein Zahnritzel 11. Die zum Antriebsgehäuse zusammengesetzten Gehäuseteile 1 und 3 bilden zwischen sich einen Getrieberaum 13 für ein Planetengetriebe 15 und eine Gewindespindel 17. Letztere ist mit einem Innengewinde 19 in Eingriff, das sich in der Stirnwand 20 des ein Spindelgehäuse bildenden Gehäuseteils 3 befindet.

Das Planetengetriebe 15 weist drei Planetenräder 21 auf, die mit dem das Sonnenrad bildenden Zahnritzel 11 in Eingriff sind. Die Planetenräder 21 sind mit ortsfester Drehachse auf Achszapfen 22 eines Planetenträgers 23 gelagert. Der Planetenträger 23 in Form einer kreisrunden Platte ist an vorstehenden Zapfen 24 des Gehäuseteils 1 fest angebracht, die in Zapfenlöcher 25 des Planetenträgers 23 eingreifen. Als abtriebsseitiges Getriebeelement des Planetengetriebes 15 ist ein Hohlrad 27 vorgesehen, das zusammen mit der Gewindespindel 17 ein einstückiges Bauteil bildet. Das Hohlrad 27 weist einen kreiszylindrischen Mantel 28 auf, der einen Topf 29 umgibt, von dessen Topfboden 30 sich die Gewindespindel 17 als koaxialer Fortsatz erstreckt. Die Innenwand des Topfes 29 weist eine Verzahnung 31 auf, mit der die Planetenräder 21 in Zahneingriff sind. Die axiale Länge des Mantels 28 und damit die axiale Länge der Verzahnung 31 sind derart gewählt, dass die Verzahnung 31 mit den Planetenrädern 21 in Zahneingriff bleibt, während sich die Gewindespindel 17 bei der von den Planetenrädern 21 erzeugten Antriebs-Drehbewegung über einen betrieblichen Hub- oder Verschiebeweg bewegt. Als Betätiger, der die je nach Drehrichtung des Elektromotors 5 in Vorschub- oder Rückzugrichtung koaxial zur Antriebswelle 7 erfolgenden, linearen Verschiebebewegungen des Hohlrades 27 auf die zu steuernde Arretiereinrichtung überträgt, die in den Fig. 1 bis 3 nicht gezeigt ist, ist an der Gewindespindel 17 als koaxialer Fortsatz ein Stößel 33 angebracht, der sich, siehe Fig. 1, durch die Stirnwand 20 des Gehäuseteils 3 nach außen erstreckt.

Eine dem Stand der Technik entsprechende elektronische Steuereinheit, die den Betrieb des Elektromotors 5 in den beiden Drehrichtungen steuert, weist eine Schaltungsplatine 35 auf, die an der Gehäuseoberseite anliegt. Wie die Fig. 2 und 3 zeigen, erstrecken sich von der Platine 35 Träger 37 in den Getrieberaum 13, an denen sich jeweils eine Lichtschranke befindet. Zur Bildung einer Sensoreinrichtung, die die Signale der mit der Schaltungsplatine 35 verbundenen Lichtschranken 39 auswertet, sind am Mantel 28 des Hohlrades 27 an dessen vorderem Umfangsrand eine axial vorstehende Randrippe 41 und am hinteren Umfangsrand eine Randrippe 43 ausgebildet, die jeweils einen spiraligen Verlauf besitzen, so dass an ihnen jeweils ein Absatz 45 gebildet ist. Bei der Annäherung an die vordere Endposition der Betätigungs-Verschiebebewegung läuft die sich an den Absatz 45 anschließende Randrippe 41 in den Lichtweg der Lichtschranke 39 für die Positionserkennung ein. Bei der Rückbewegung läuft bei Annäherung an die Endposition der sich an den Absatz 45 anschließende Teil der Randrippe 43 in den Lichtweg der zugeordneten Lichtschranke 39 ein, um wiederum ein Positionssignal zu generieren. Wenn für die Endpositionierung des Hohlrades 27 und damit des den Betätiger bildenden Stößels 33 mechanische Anschläge vorgesehen sind, können die Signale der Lichtschranken 39 das Abbremsen oder Auslaufen des Motors 5 vor Erreichen der mechanischen Anschläge bewirken. Alternativ zu den durch die Randrippen 41 und 43 beeinflussten Lichtschranken 39 könnte ein Hell-Dunkel-Kontrast auf der Außenseite des Mantels 28 des Hohlrades 27 zur optischen Positionserkennung benutzt werden.

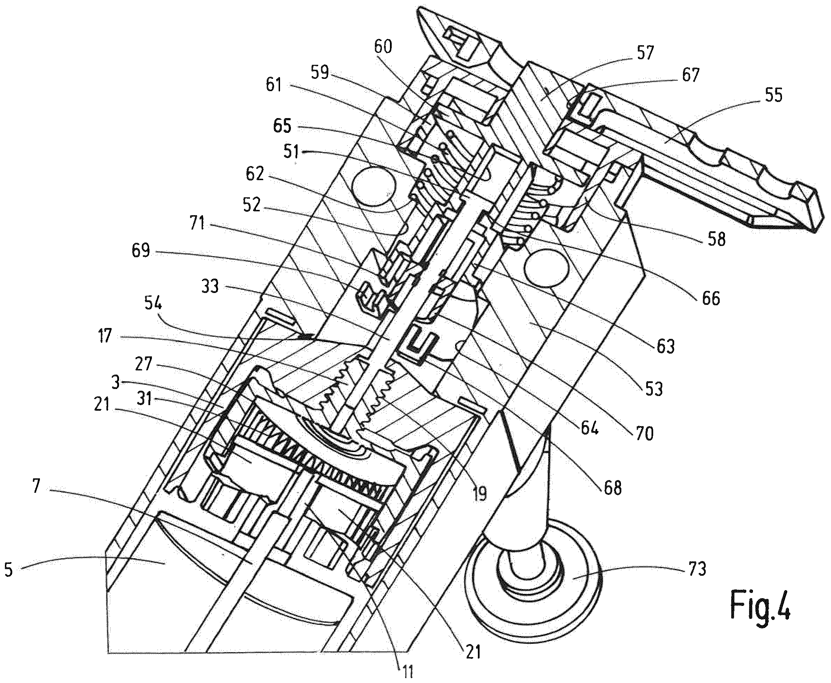

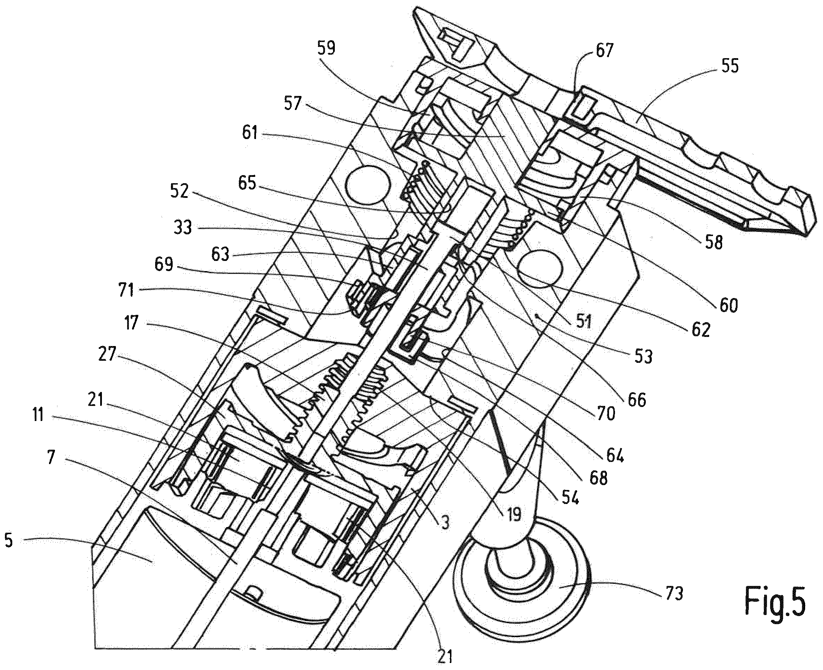

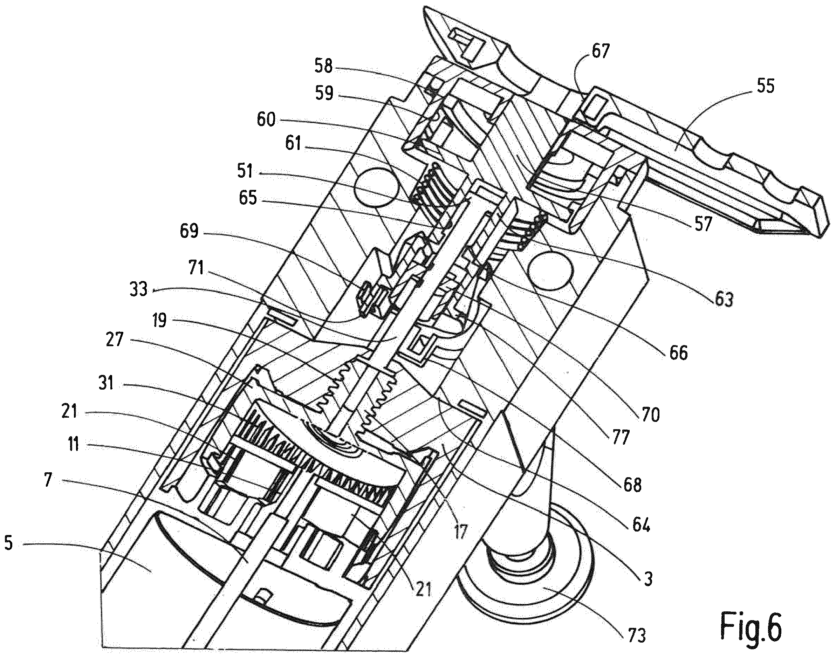

Die Fig. 4 bis 8 zeigen ein Ausführungsbeispiel einer Arretiereinrichtung in Form einer Bolzenzuhaltung. Für die Steuerung der Arretiereinrichtung hat der den axial bewegbaren Betätiger bildende Stößel 33 die Form einer längeren Stange, die in einem radial auskragenden Mitnehmer 51 endet und sich in einen zentralen Durchgang 52 des Gehäuses 53 der Arretiereinrichtung hinein erstreckt. Der Antrieb mit dem aus den Gehäuseteilen 1, 3 gebildeten Antriebsgehäuse ist am offenen Ende 54 des Durchgangs 52 in das Gehäuse 53 eingesetzt, das von seinem offenen Ende 54 her das Gehäuseteil 3 umgibt. Die Arretiereinrichtung weist für die Arretierung oder Freigabe einer Schutztür 55, von der in Fig. 4 bis 8 lediglich ein Randleistenabschnitt angedeutet ist, einen Zuhaltebolzen 57 auf, der zwischen Arretierposition und Freigabeposition koaxial zur Achse der Linearbewegung des Stößels 33 verschiebbar ist. Der Zuhaltebolzen 57 ist in Fig. 4 in der vorgeschobenen Arretierposition und in den Fig. 5 und 6 in zurückgezogener Freigabeposition dargestellt.

Der Zuhaltebolzen 57 ist in einem Führungskörper 58 geführt, der in das freie offene Ende des Durchgangs 52 des Gehäuses 53 eingesetzt ist und einen Hohlzylinder 59 umgibt, in dem der Zuhaltebolzen 57 mit einem radial auskragenden Flanschteil 60 geführt ist. Eine Schließfeder 61, die sich am Flanschteil 60 und an einer Stufe 62 des Durchgangs 52 abstützt, spannt den Zuhaltebolzen 57 für eine Bewegung in die in Fig. 4 gezeigte Arretierposition vor. Vom Flanschteil 60 ausgehend, setzt sich der Zuhaltebolzen 57 mit einem Hülsenteil 63 fort, das sich durch die Schließfeder 61 hindurch bis zu einem erweiterten Endabschnitt 64 des Durchgangs 52 erstreckt. In dem sich an das Flanschteil 60 anschließenden Anfangsteil bildet das Hülsenteil 63 für den Mitnehmer 51 des Stößels 33 eine Führungsbahn 65, die an dem vom Flanschteil 60 entfernten Ende durch eine radial nach innen vorspringende Anlagefläche 66 für den Mitnehmer 51 begrenzt ist.

Die Fig. 4 zeigt den Arretierzustand, bei dem der Zuhaltebolzen 57 in die Bolzenöffnung 67 der Tür 55 durch die Vorspannkraft der Feder 61 vorgeschoben ist. Der Stößel 33 befindet sich in der ausgefahrenen Position, wobei sein Mitnehmer 51 an der Anlagefläche 66 anliegt. Wird zum Überführen in den Freigabezustand der Stößel 33 zurückgezogen, nimmt dessen an der Anlagefläche 66 anliegender Mitnehmer 51 den Zuhaltebolzen 57 gegen die Kraft der Schließfeder 61 in die Freigabeposition mit. Dieser Betriebszustand ist in Fig. 5 dargestellt. Für die Erkennung der Positionen, die hierbei vom Stößel 33 und vom Zuhaltebolzen 57 eingenommen sind, sind in dem erweiterten Endabschnitt 64 des Durchgangs 52 Lichtschranken 68 und 69 angeordnet. Bei dem Zustand von Fig. 5 unterbricht ein becherartiger Bund 70, der am Stößel 33 angebracht ist, den Lichtweg der Lichtschranke 68, während ein am Ende des Hülsenteils 63 seitlich auskragendes Endteil 71 den Lichtweg der Lichtschranke 69 unterbricht.

Der in Fig. 5 gezeigte Zustand stellt den Fall einer "Normalentriegelung" dar, bei dem der Zuhaltebolzen 57 durch die von der Betätigungsvorrichtung erzeugte Rückzugsbewegung des Stößels 33 gegen die Kraft der Schließfeder 61 zurückgezogen ist. Bei einem Ausfall der Betätigungsvorrichtung ermöglicht die Arretiereinrichtung eine Fluchtentriegelung. Dieser Betriebszustand, bei dem der Stößel 33 in der vorgeschobenen Position verblieben ist, ist in Fig. 6 dargestellt. Wie dort gezeigt, ist für eine gegen die Federkraft erfolgende Bewegung des Zuhaltebolzens 57 durch die Länge der Führungsbahn 65, die in dem Hülsenteil 63 für Relativbewegungen zum Mitnehmer 61 zur Verfügung gestellt ist, eine Entkoppelstrecke gebildet, über deren Länge der Zuhaltebolzen 57 in die Freigabeposition bewegbar ist, wobei sich der Mitnehmer 51 des Stößels 33 von der Anlagefläche 66 abhebt. Dabei wird der Freigabezustand des Zuhaltebolzens 57, ebenso wie im Fall der "Normalentriegelung" von Fig. 5, dadurch signalisiert, dass das Endteil 71 den Lichtweg der Lichtschranke 69 unterbricht. Anders als bei Fig. 5 ist jedoch der vorgeschobene Zustand des Stößels 33 dadurch signalisiert, dass der Lichtweg der Lichtschranke 68 nicht unterbrochen ist. Die erfindungsgemäße Vorrichtung kann über eine an sich bekannte RFID-Technologie mit einem Betätiger (nicht dargestellt) zusammenwirken, der an dem jeweiligen sicherheitsrelevanten, bewegbaren Bauteil (Schutztür, Schutzklappe) angeordnet mindestens eine Information, insbesondere betreffend den Öffnungs- oder Schließzustand an die Vorrichtung und deren Ansteuerteile weiterleitet.

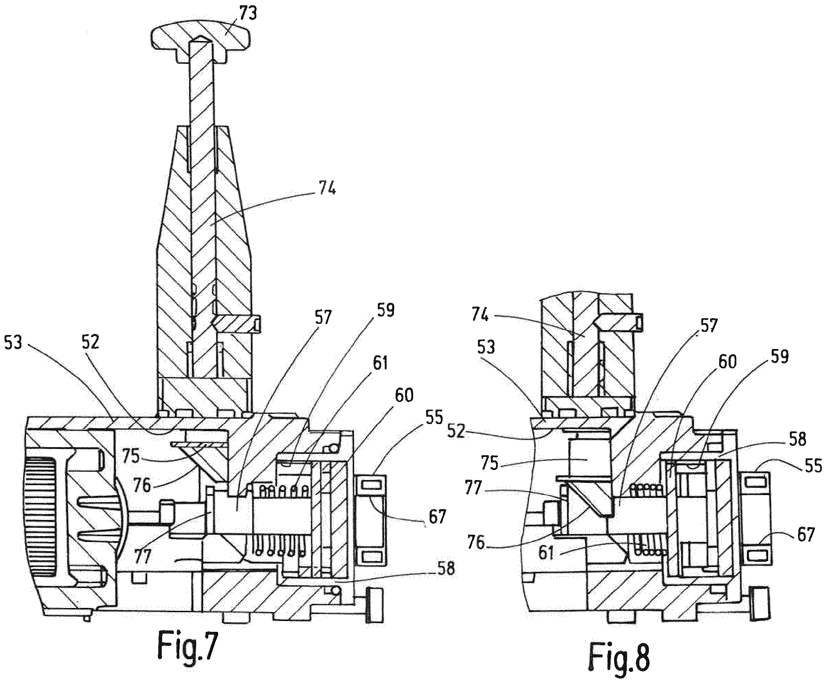

Die Fig. 7 und 8 zeigen in schematisch vereinfachter Darstellung eine Notbetätigung, mittels deren eine Fluchtentriegelung manuell durchführbar ist. Die Notbetätigung weist einen Notknopf 73 auf, der mit einer Betätigungsstange 74 verbunden ist. Diese weist an dem sich in den Gehäusedurchgang 52 erstreckenden Ende eine Betätigungsgabel 75 auf, die das Hülsenteil 63 des Zuhaltebolzens 57 übergreift und schräge Steuerflächen 76 aufweist, die beim Betätigen des Notknopfes 73 an einem vorstehenden Flanschrand 77 am Zuhaltebolzen 57 angreifen und diesen, wie der Vergleich der Fig. 7 und 8 zeigt, gegen die Wirkung der Feder 61 in die Entriegelungsposition zurückziehen.

## Patentansprüche

1. Vorrichtung zur gesteuerten Arretierung oder Freigabe eines sicherheitsrelevanten, beweglichen Bauteils (55), wie einer Schutztür, Schutzklappe oder dergleichen, mit einem bewegbaren Sperrteil (57) und mit einem Einstellbewegungen des Sperrteils (57) zwischen Arretierposition und Freigabeposition steuernden selbsthemmenden Antrieb (5, 17, 19, 21, 23, 27), wobei ein vom Antrieb (5, 17, 19, 21, 23, 27) bewegbarer Betätiger (33) vorgesehen ist, der für ein vom Antrieb (5, 17, 19, 21, 23, 27) bewirktes Überführen des Sperrteils (57) in die Freigabeposition mit diesem mechanisch gekoppelt und für ein unabhängig vom Antrieb (5, 17, 19, 21, 23, 27) bewirktes Überführen in die Freigabeposition vom Sperrteil (57) entkoppelbar ist, **dadurch gekennzeichnet, dass** ein Planetengetriebe (15) sowie ein durch dieses antreibbarer, den Betätiger (33) zwischen vorgeschobenen und zurückgezogenen Schaltstellungen bewegender Spindeltrieb (17) vorgesehen sind.

2. Vorrichtung nach Anspruch 1, **dadurch gekennzeichnet, dass** sie eine Arretiereinrichtung (53) in Form einer Bolzenzuhaltung mit einem Sperrteil in Form eines Zuhaltebolzens (57) aufweist, der für seine Bewegungen zwischen Arretierposition und Freigabeposition koaxial zu einer linearen Verschiebebewegung des Betätigers (33) gelagert und durch einen Energiespeicher (61) in die Arretierposition vorgespannt ist.

3. Vorrichtung nach Anspruch 1 oder 2, **dadurch gekennzeichnet, dass** als Antrieb ein rotatorischer Antrieb (5, 17, 19, 21, 23, 27) mit einem die Drehbewegung der Antriebswelle (7) eines Elektromotors (5) in zur Achse (9) der Antriebswelle (7) koaxiale Linearbewegungen des Betätigers (33) umsetzenden Getriebe (15) vorgesehen ist.

4. Vorrichtung nach einem der vorstehenden Ansprüche, **dadurch gekennzeichnet, dass** ein den Betätiger bildender Stößel (33) in Form einer Stange vorgesehen ist, der sich in einen zentralen Durchgang (52) des Gehäuses (53) der Arretiereinrichtung hineinerstreckt.

5. Vorrichtung nach Ansprüche 2 und 4, **dadurch gekennzeichnet, dass** der Stößel (33) an dem vom Antrieb (5, 17, 19, 21, 23, 27) abgewandten Ende einen Mitnehmer (51) aufweist, der zur Übertragung seiner Rückzugsbewegung mit einer am Zuhaltebolzen (57) befindlichen Anlagefläche (66) zusammenwirkt, und dass am Zuhaltebolzen (57) eine Entkoppelstrecke (65) gebildet ist, über deren Länge der Zuhaltebolzen (57) bei von der Anlagefläche (66) abgehobenem Mitnehmer (51) gegen die angreifende Vorspannkraft des Energiespeichers (61) aus der Arretierposition in die Freigabeposition bewegbar ist.

6. Vorrichtung nach Anspruch 2, **dadurch gekennzeichnet, dass** der Zuhaltebolzen (57) ein sich axial in Richtung auf den Antrieb (5, 17, 19, 21, 23, 27) erstreckendes Hülsenteil (63) aufweist, in dem als Entkoppelstrecke für den Mitnehmer (51) des Stößels (33) eine Führungsbahn (65) gebildet ist, über deren Länge der Zuhaltebolzen (57) relativ zum Mitnehmer (51) axial gegen die Vorspannkraft des Energiespeichers (61) bewegbar ist.

7. Vorrichtung nach Anspruch 6, **dadurch gekennzeichnet, dass** der Zuhaltebolzen (57) im offenen Ende des Gehäuses (53) mit einem radial auskragenden Flanschteil (60) geführt ist, an das sich das Hülsenteil (63) anschließt, das von einer als Energiespeicher vorgesehenen Schließfeder in Form einer Schraubenfeder (61) umgeben ist, die sich am Flanschteil (60) und an einer Stufe (62) im Durchgang (52) des Gehäuses (53) abstützt

8. Vorrichtung nach Anspruch 7, **dadurch gekennzeichnet, dass** eine Notbetätigung (73 bis 77) vorgesehen ist, mittels deren der Zuhaltebolzen (57) unter Abheben des Mitnehmers (61) des Stößels (33) von der Anlagefläche (66) gegen die Wirkung der Schraubenfeder (61) manuell aus der Arretierposition in die Freigabeposition bewegbar ist.

9. Vorrichtung nach Anspruch 8, **dadurch gekennzeichnet, dass** die Notbetätigung einen Notknopf (73) aufweist, der mit einer im Gehäuse (53) quer zur Achse (9) bewegbaren Stange (74) verbunden ist, die an dem sich in den Gehäusedurchgang (52) erstreckenden Ende Schrägflächen (76) aufweist, die bei Betätigen des Notknopfes (73) an einem vorstehenden Flanschrand (77) des Hülsenteils (63) des Zuhaltebolzens (57) angreifen, um diesen gegen die Wirkung der Schraubenfeder (61) zu bewegen.

## Claims

1. Device for controlled locking or release of a safety-relevant movable component (55), such a protective door, protective flap or the like, with a movable blocking member (57) and with a self-locking drive (5, 17, 19, 21, 23, 27) controlling setting movements of the blocking member (57) between locking position and release position, wherein an actuator (33) movable by the drive (5, 17, 19, 21, 23, 27) is provided, which actuator is mechanically coupled with the blocking element (57) for transfer, which is produced by the drive (5, 17, 19, 1, 23, 27), of the blocking element (57) to the release position and can be decoupled from the blocking member (57) for transfer, which is produced independently of the drive (5, 17, 19, 21, 23, 27), to the release position, **characterised in that** a planetary transmission (15) as well as a spindle drive (17), which is drivable by the planetary transmission and which moves the actuator (33) between pushed forward and drawn back switching settings, are provided.

2. Device according to claim 1, **characterised in that** it comprises a locking device (53) in the form of a pin retainer with a blocking member in the form of a retaining pin (57), which for movements thereof between locking position and release position is mounted coaxially with respect to a linear displacing movement of the actuator (33) and is biased by an energy store (61) into the locking position.

3. Device according to claim 1 or 2, **characterised in that** a rotary drive (5, 17, 19, 21, 23, 27) with a transmission (15) converting the rotational movement of the drive shaft (7) of an electric motor (5) into linear movements of the actuator (33) coaxial with the axis (9) of the drive shaft (7) is provided as drive.

4. Device according to any one of the preceding claims, **characterised in that** a plunger (33), which forms the actuator, in the form of a rod is provided, which extends in a central passage (52) of the housing (53) of the locking device.

5. Device according to claims 2 and 4, **characterised in that** the plunger (33) has at the end remote from the drive (5, 17, 19, 21, 23, 27) an entrainer (51) which for transmission of its retracting movement co-operates with a support surface (66) present at the retaining pin (57) and that formed at the retaining pin (57) is a decoupling path (65) over the length of which the retaining pin (57) is movable from the locking position to the release position against the acting biasing force of the energy store (61) when the entrainer (51) is lifted off the support surface (66).

6. Device according to claim 2, **characterised in that** the retaining pin (57) comprises a sleeve part (63) which extends in direction axially towards the drive (5, 17, 19, 21, 23, 27) and in which a guide track (65) is formed as decoupling path for the entrainer (51) of the plunger (33), the retaining pin (57) being axially movable over the length of the guide track relative to the entrainer (51) against the biasing force of the energy store (61).

7. Device according to claim 6, **characterised in that** the retaining pin (57) is guided in the open end of the housing (53) by a radially projecting flange part (60) with which the sleeve part (63) is connected, which is surrounded by a closing spring, which is provided as an energy store, in the form of a helical spring (61), the helical spring being supported on the flange part (60) and on a step (62) in the passage (52) of the housing (53).

8. Device according to claim 7, **characterised in that** an emergency actuating means (73 to 77) is provided, by way of which the retaining pin (57) is manually movable from the locking position to the release position against the action of the helical spring (61) when the entrainer (61) of the plunger (33) lifts off the support surface (66).

9. Device according to claim 8, **characterised in that** the emergency actuating means comprises an emergency button (73), which is connected with a rod (74) movable in the housing (53) transversely to the axis (9) and having inclined surfaces (76) at the end extending in the housing passage (52), which inclined surfaces on actuation of the emergency button (73) engage a protruding flange edge (77) of the sleeve part (63) of the retaining pin (57) in order to move this against the action of the helical spring (61).

## Revendications

1. Dispositif d'arrêt ou de libération commandé(e) d'un élément structurel mobile (55) essentiel à la sécurité, tel qu'une porte de protection, un volet protecteur ou un objet similaire, comprenant une pièce mobile de blocage (57) et un entraînement autobloquant (5, 17, 19, 21, 23, 27) pilotant des mouvements de réglage de ladite pièce de blocage (57) entre un emplacement d'arrêt et un emplacement de libération, sachant qu'il est prévu un actionneur (33) qui peut être mis en mouvement par ledit entraînement (5, 17, 19, 21, 23, 27), est couplé mécaniquement à ce dernier en vue d'un transfert de ladite pièce de blocage (57) à l'emplacement de libération, provoqué par ledit entraînement (5, 17, 19, 21, 23, 27), et peut être découplé d'avec ladite pièce de blocage (57) en vue d'un transfert audit emplacement de libération provoqué indépendamment dudit entraînement (5, 17, 19, 21, 23, 27), **caractérisé par** la présence d'un train épicycloïdal (15), ainsi que d'un mécanisme à broche (17) pouvant être entraîné par ce dernier, et imprimant des mouvements à l'actionneur (33) entre des positions de commutation avancées et rétractées.

2. Dispositif selon la revendication 1, **caractérisé par le fait qu'**il comporte un système d'arrêt (53) revêtant la forme d'un verrouillage par pêne muni d'une pièce de blocage se présentant comme un pêne de verrouillage (57) qui est monté coaxialement par rapport à un mouvement de coulissement linéaire de l'actionneur (33), afin d'accomplir ses mouvements entre l'emplacement d'arrêt et l'emplacement de libération, et est précontraint vers ledit emplacement d'arrêt par un accumulateur d'énergie (61).

3. Dispositif selon la revendication 1 ou 2, **caractérisé par** la présence, en tant qu'entraînement, d'un entraînement rotatif (5, 17, 19, 21, 23, 27) doté d'une transmission (15) convertissant le mouvement rotatoire de l'arbre d'entraînement (7) d'un moteur électrique (5) en des mouvements linéaires de l'actionneur (33), coaxiaux à l'axe (9) dudit arbre d'entraînement (7).

4. Dispositif selon l'une des revendications précédentes, **caractérisé par** la présence d'un poussoir (33) matérialisant l'actionneur et revêtant la forme d'une tige qui s'engage dans un corridor central (52) du boîtier (53) du système d'arrêt.

5. Dispositif selon les revendications 2 et 4, **caractérisé par le fait que** le poussoir (33) comporte, à l'extrémité tournée à l'opposé de l'entraînement (5, 17, 19, 21, 23, 27), un organe d'entraînement (51) coopérant, en vue de transmettre son mouvement de retrait, avec une surface d'appui (66) située sur le pêne de verrouillage (57) ; et **par le fait qu'**un trajet de découplage (65) est ménagé sur ledit pêne de verrouillage (57), trajet sur la longueur duquel ledit pêne de verrouillage (57) peut être mû de l'emplacement d'arrêt à l'emplacement de libération, en opposition à la force de précontrainte appliquée par l'accumulateur d'énergie (61), lorsque ledit organe d'entraînement (51) est soulevé à l'écart de ladite surface d'appui (66).

6. Dispositif selon la revendication 2, **caractérisé par le fait que** le pêne de verrouillage (57) est pourvu d'une partie (63) formant douille, qui s'étend axialement en direction de l'entraînement (5, 17, 19, 21, 23, 27) et dans laquelle est formée, en tant que trajet de découplage destiné à l'organe d'entraînement (51) du poussoir (33), une piste de guidage (65) sur la longueur de laquelle ledit pêne de verrouillage (57) peut être mû axialement, par rapport audit organe d'entraînement (51), en opposition à la force de précontrainte de l'accumulateur d'énergie (61).

7. Dispositif selon la revendication 6, **caractérisé par le fait que** le pêne de verrouillage (57) est guidé, à l'extrémité ouverte du boîtier (53), par une partie (60) formant collerette saillant radialement, et à laquelle se rattache la partie (63) formant douille qui est entourée par un ressort de fermeture, prévu en tant qu'accumulateur d'énergie et revêtant la forme d'un ressort hélicoïdal (61) prenant appui contre ladite partie (60) formant collerette et contre un gradin (62), dans le corridor (52) dudit boîtier (53).

8. Dispositif selon la revendication 7, **caractérisé par** la présence d'un actionnement d'urgence (73 à 77) au moyen duquel le pêne de verrouillage (57) peut être mû manuellement de l'emplacement d'arrêt à l'emplacement de libération, en opposition à l'action du ressort hélicoïdal (61), avec soulèvement de l'organe d'entraînement (51) du poussoir (33) à l'écart de la surface d'appui (66).

9. Dispositif selon la revendication 8, **caractérisé par le fait que** l'actionnement d'urgence est muni d'un bouton d'urgence (73) relié à une tige (74) qui est mobile dans le boîtier (53), transversalement par rapport à l'axe (9), et qui est dotée, à l'extrémité s'engageant dans le corridor (52) dudit boîtier, de surfaces inclinées (76) venant en prise, lors d'un actionnement dudit bouton d'urgence (73), avec un rebord saillant (77) de la partie (63) formant douille sur le pêne de verrouillage (57), afin de mouvoir ce dernier en opposition à l'action du ressort hélicoïdal (61).
